# EUROPÄISCHE PATENTSCHRIFT

(11) **EP 2 002 527 B1**
(45) Veröffentlichungstag und Bekanntmachung des Hinweises auf die Patenterteilung: **11.07.2012**
(21) Anmeldenummer: 06724091.1
(22) Anmeldetag: 06.04.2006
(51) Int. Cl.: H02K 3/44, H02K 3/38

(54) **ANKER FÜR EINEN DURCHZUGSBELÜFTETEN ELEKTROMOTOR**
ROTOR FOR A FORCED-AIR-COOLED ELECTRIC MOTOR
INDUIT POUR UN MOTEUR ÉLECTRIQUE VENTILÉ

(43) Veröffentlichungstag der Anmeldung: 17.12.2008
(73) Patentinhaber: Metabowerke GmbH, 72622 Nürtingen (DE)
(72) Erfinder: SCHMOHL, Michael, 72119 Ammerbuch (DE); FALTER, Norbert, 72622 Neckarhausen (DE); HOLZWARTH, Dietrich, 73773 Aichwald (DE)
(74) Vertreter: Raunecker, Klaus Peter
(86) Internationale Anmeldenummer: PCT/EP2006/003146
(87) Internationale Veröffentlichungsnummer: WO 2007/118483

(56) Entgegenhaltungen:
- EP-A2- 0 261 306
- DE-A1- 3 629 050
- DE-C- 904 205

## Beschreibung

Die Erfindung betrifft einen Anker für einen durchzugsbelüfteten Elektromotor, insbesondere einen Universalmotor, insbesondere für den Einsatz bei Elektrowerkzeuggeräten, mit den Merkmalen des Oberbegriffs des Anspruchs 1.

Bei durchzugsbelüfteten Elektromotoren insbesondere von Elektrowerkzeuggeräten, wie z. B. Winkelschleifern oder Bohrmaschinen, WO im Zuge der Bearbeitung partikulärer Schmutz, Schleif- oder Bohrstaub entsteht, besteht grundsätzlich das Problem einer Beeinträchtigung der Ankerwicklung, insbesondere des Wickelkopfs oder der wickelköpfe der Ankerwicklung, da Partikel und Staub im Kühlluftstrom mitgerissen werden und abrasiv auf die Ankerwicklung einwirken.

Es wurden bereits Vorschläge unterbreitet, dem entgegenzuwirken. So wurde mit DE 1 613 074 A vorgeschlagen, den Wickelkopf eines Ankers mit einer hochsaugfähigen, flexiblen und porösen Einlage aus Textilgewebe, Glasfaser oder Vlies, die mit Träufelharz durchtränkt ist, zu bedecken. Es soll so nach der Aushärtung eine widerstandsfähige Armierung des Wickelkopfs erreicht werden.

Mit DE 196 20 840 A1 wurde vorgeschlagen, auf die Wickelköpfe entsprechend der gewölbten Form der Wickelköpfe stegförmige Elemente aus mit Lack getränkten Filzstreifen oder aus Epoxyharz aufzubringen. Hierdurch soll bei rotierendem Antrieb des Ankers verhindert werden, dass Partikel auf den Wickelkopf auftreffen.

Mit EP 0 261 306 A2 und DE 298 21 112 U1 wurde vorgeschlagen, bei einem oder bei beiden Wickelköpfen einen sich konisch oder kalottenförmig verjüngenden Käfig aus zwei zur Längsachse konzentrisch verlaufenden ringförmigen Elementen und diese Elemente verbindenden geneigten Streben vorzusehen, der auf den Wickelkopf oder auf das Blechpaket oder den Kollektor drehfest aufbringbar ist und ebenfalls bei rotierendem Antrieb einen Schutz gegen Partikelbeaufschlagung des Wickelkopfs bilden soll.

DE-A-904 205 offenbart bei einem Anker für einen kleinbauenden Elektromotor an Stelle eines Radialkollektors einen Flachkollektor zu verwenden, der auf einer Seite in axialer Richtung vorstehende Befestigungsstreben aufweist, mit denen der Flachkollektor zur Montage in die Längsnuten des Blechpakets einsteckbar ist.

Die genannten Lösungen sind verhältnismäßig aufwendig. Der vorliegenden Erfindung liegt die Aufgabe zugrunde, einen wirksamen und einfach sowie kostengünstig realisierbaren Schutz für Anker-Wickelköpfe gegen abrasive Beanspruchung vorzuschlagen.

Diese Aufgabe wird erfindungsgemäß durch einen Auber mit den Merkmalen des Anspruchs 1 gelöst.

Es wurde erfindungsgemäß erkannt, dass die Längsnuten des Blechpakets, die üblicherweise nur zu etwa 55 % mit Drahtwindungen "befüllt" sind, Montageraum für weitere Komponenten des Ankers zur Verfügung stellen können. Des Weiteren wurde erfindungsgemäß erkannt, dass auf die beanspruchte.Weise ein wirksamer Schutz gegen abrasiv wirkende Partikelbeaufschlagung der Anker-Wickelköpfe realisiert werden kann. Die 3 bis 20 mm über die Stirnseite des Blechpakets axial überstehenden Stäbe bilden nämlich bei rotierendem Antrieb des Ankers im Betrieb des Elektromotors bei hohen Drehzahlen ein extremst wirksames Schutzschild in Form einer rotierenden Abschirmung, die bewirkt, dass nur wenig oder kein Partikelstaub auf den Wickelkopf auftreffen und die Wicklung beschädigen kann. Dennoch kann der Elektromotor und dessen Anker durch einen hinreichenden Kühlluftstrom wirksam gekühlt werden. Partikel werden erfindungsgemäß abgewiesen.

Es wäre auch denkbar, dass die über die Stirnseite axial überstehenden Stabenden bezüglich der Längsachse geneigt oder bogenförmig gekrümmt sind, insbesondere der sich verjüngenden Form des Wickelkopfs folgend.

Nach einer Ausführungsform des erfindungsgemäßen Ankers sind die Stäbe in Längsrichtung länger ausgebildet als die axiale Abmessung des Blechpakets. Die Stäbe können also auf beiden Seiten über die Stirnseite des Blechpakets überstehen. Alternativ könnten auch in jeder Nut zwei entsprechend kürzer ausgebildete Stäbe verwendet werden.

Es hat sich als vorteilhaft und zweckmäßig erwiesen, wenn die Dicke der Stäbe 1 bis 5 mm beträgt. Sie sind vorteilhafterweise in die Längsnuten eingeklebt. Die Stäbe können aus Holz, Metall, Hartkunststoff oder Keramik gebildet sein.

Die Erfindung betrifft des Weiteren einen belüfteten Elektromotor. Es besteht die Aufgabe, einen dauerhaften verschleißunempfindlichen Elektromotor bereitzustellen, der auf einfache und kostengünstige Weise einen Schutz der Ankerwicklung vor Partikelbeaufschlagung zur Verfügung stellt. Gleichermaßen besteht auch die Aufgabe, ein Elektrowerkzeuggerät im Hinblick auf abrasiv wirkende Beanspruchung im Betrieb auf einfache und kostengünstige Weise unempfindlich auszubilden.

Diese weiteren Aspekte werden gelöst durch einen Elektromotor nach Anspruch 6 und ein Elektrowerkzeuggerät nach Anspruch 7.

Weitere Merkmale, Einzelheiten und Vorteile der Erfindung ergeben sich aus den beigefügten Patentansprüchen und aus der zeichnerischen Darstellung und nachfolgenden Beschreibung einer besonders bevorzugten Ausführungsform des erfindungsgemäßen Ankers. In der Zeichnung zeigt:

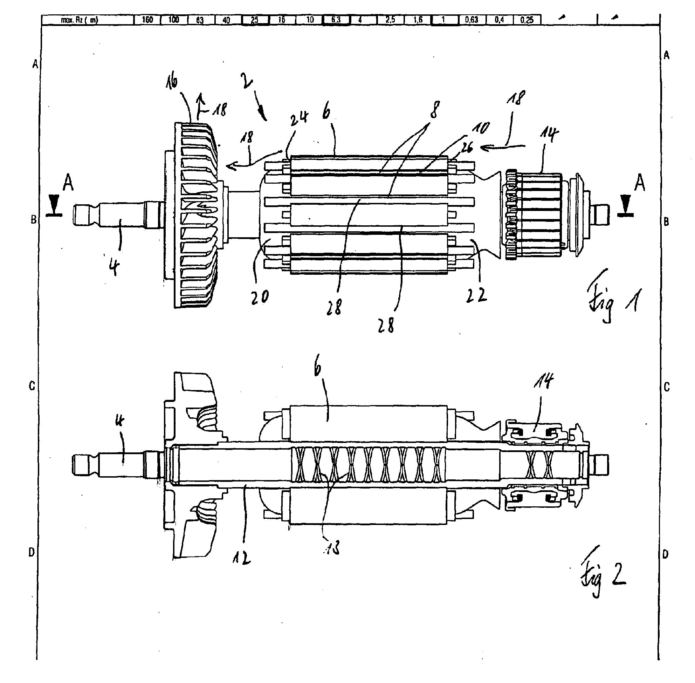

Figur 1 eine Seitenansicht eines erfindungsgemäßen Ankers und
Figur 2 eine Schnittansicht mit Schnittebene A-A in Figur 1.

Die Figuren zeigen einen insgesamt mit dem Bezugszeichen 2 bezeichneten Anker für einen belüfteten Elektromotor, insbesondere für einen Elektrowerkzeuggerät, beispielsweise ein Schleif- oder Bohrwerkzeuggerät. Der Anker 2 umfasst eine im beispielhaften Fall durchgehende Ankerwelle 4, auf der ein Blechpaket 6 mit einer Mehrzahl von Längsnuten 8 und einer Ankerwicklung 10 vorgesehen ist. Die metallische Ankerwelle 4 trägt im dargestellten Fall eine Kunststoffummantelung 12. Entweder ist das Blechpaket 6 mit der Ankerwicklung 10 auf diese kunststoffummantelte Ankerwelle 4 aufgepresst oder der Kunststoff ist zwischen Blechpaket 6 und metallischem Teil der Ankerwelle 4 eingespritzt. Man erkennt Nuten 13 auf der Oberfläche des metallischen Teils der Ankerwelle 4 zur besseren Halterung der Kunststoffummantelung. Jedenfalls ist das Blechpaket 6 drehfest auf der Ankerwelle 4 befestigt. Des Weiteren ist ein Radialkollektor 14 und ein Lüfterrad 16 vorgesehen, mittels dessen ein Kühlluftstrom in Richtung der Pfeile 18 an Radialkollektor 14 und Blechpaket 16 vorbei in Richtung auf das Lüfterrad 16 erzeugt wird.

Die Längsnuten 8 nehmen eine in der Zeichnung nicht näher dargestellte Vielzahl von Drahtwindungen der Ankerwicklung 10 auf. Diese Drahtwindungen bilden zum Lüfterrad 16 hin einen ersten Wickelkopf 20 und zum Radialkollektor 14 hin einen zweiten Wickelkopf 22. Zusätzlich zu den Drahtwindungen ist in den Längsnuten 8 jeweils ein über beide Stirnseiten 24, 26 des Blechpakets einige Millimeter überstehender Stab 28 untergebracht. Der jeweilige Stab 28 ist entweder nach dem Aufbringen der Ankerwicklung 10 in die jeweilige Längsnut 8 eingesetzt und liegt dann von radial außen gegen die Drahtwindungen der Ankerwicklung 10 an. Es ist aber auch denkbar, dass der jeweilige Stab quasi mit eingewickelt ist, also durch Drahtwindungen der Ankerwicklung 10 hindurchgeführt ist. Die Drahtwindungen der Ankerwicklung 10 sind im Bereich der Wickelköpfe 20 und 22 mit Träufelharz fixiert und armiert. Durch das Träufelharz werden auch die Stäbe 28 eingebettet und in den Längsnuten 8 fixiert.

Bei rotierendem Antrieb des Ankers 2 bilden die überstehenden Enden der Stäbe 28 einen rotierenden Schutzschild, mit dem verhindert werden kann, dass im Kühlluftstrom mitgeführte Partikel die Wickelköpfe 20, 22 beaufschlagen und abrasiv abnutzen. Ein derartiger Schutzschild aus über die Stirnseiten 24, 26 überstehenden Stabenden kann in vorteilhafter Weise lüfterseitig und/oder kommutatorseitig verwendet werden. Die überstehenden Enden der Stäbe 28 können auch zur Längsrichtung nach innen geneigt oder gekrümmt sein.

## Patentansprüche

1. Anker (2) für einen durchzugsbelüfteten Elektromotor, insbesondere einen Universalmotor, insbesondere für den Einsatz bei Elektrowerkzeuggeräten, mit einem Längsnuten (8) aufweisenden Blechpaket (6) und aus den Längsnuten (8) stirnseitig austretenden Drahtwindungen einer Wicklung (10), die dort einen Wickelkopf (20, 22) bilden, und mit einem Radialkollektor (14) auf einer Seite des Blechpakets (6) und mit einem Lüfterrad (16) auf der gegenüberliegenden Seite des Blechpakets (6) **dadurch gekennzeichnet, dass** in einige oder alle Längsnuten (8) des Blechpakets (6) ein in Längsrichtung ausgerichteter Stab (28) eingesetzt ist, der auf beiden Stirnseiten (24, 26) des Blechpakets (6) axial in Längsrichtung 3 - 20 mm übersteht und die beidseits überstehenden Stabenden so den Wickelkopf (20, 22) an den Stirnseiten umgeben.

2. Anker nach Anspruch 1, **dadurch gekennzeichnet, dass** die Stäbe (28) in Längsrichtung länger ausgebildet sind als die axiale Abmessung des Blechpakets (6).

3. Anker nach einem der vorstehenden Ansprüche, **dadurch gekennzeichnet, dass** die Dicke der Stäbe (28) 1 - 5 mm beträgt.

4. Anker nach einem der vorstehenden Ansprüche, **dadurch gekennzeichnet, dass** die Stäbe (28) in die Längsnuten (8) eingeklebt sind.

5. Anker nach einem der vorstehenden Ansprüche, **dadurch gekennzeichnet, dass** die Stäbe (28) aus Holz, Metall, Hartkunststoff oder Keramik gebildet sind.

6. Elektromotor mit einem Anker (2) nach einem oder mehreren der vorstehenden Ansprüche.

7. Elektrowerkzeuggerät mit einem Elektromotor nach Anspruch 6.

## Claims

1. Rotor (2) for a forced-air-cooled electric motor, in particular a universal motor, in particular for use in power tool devices, having a lamination stack (6) comprising longitudinal grooves (8) and wire windings of a winding (10) emerging from the longitudinal grooves (8) on the end face, which form a coil end (20, 22) there, and having a radial collector (14) on one side of the lamination stack (6) and having a fan wheel (16) on the opposing side of the lamination stack (6), **characterised in that** a rod (28), aligned in the longitudinal direction, is inserted into some or all longitudinal grooves (8), which rod (28) projects out 3 - 20 mm axially on both end faces (24, 26) of the lamination stack (6) in the longitudinal direction and the rod ends projecting out on both sides thus surround the coil end (20, 22) on the end faces.

2. Rotor according to Claim 1, **characterised in that** the rods (28) are designed longer in the longitudinal direction than the axial dimension of the lamination stack (6).

3. Rotor according to any one of the preceding claims, **characterised in that** the thickness of the rods (28) is 1 - 5 mm.

4. Rotor according to any one of the preceding claims, **characterised in that** the rods (28) are bonded into the longitudinal grooves (8).

5. Rotor according to any one of the preceding claims, **characterised in that** the rods (28) are formed of wood, metal, hard plastic or ceramic.

6. Electric motor having a rotor (2) according to any one of or a plurality of the preceding claims.

7. Power tool device having an electric motor according to Claim 6.

## Revendications

1. Induit (2) pour un moteur électrique ventilé par passage traversant, en particulier un moteur universel, en particulier pour l'utilisation dans des outils électriques, comprenant un paquet de tôles (6) qui comporte des rainures longitudinales (8) et des enroulements de fil d'un bobinage (10) qui sortent des rainures longitudinales (8) sur le sur le côté frontal, qui forme à cet endroit une tête de bobinage (20, 22), et un collecteur radial (14) sur un côté du paquet de tôles (6) et une roue de ventilateur (16) sur le côté opposé du paquet de tôles (6), **caractérisé en ce que**, dans certaines ou dans toutes les rainures longitudinales (8) du paquet de tôles (6), est insérée une barre (28) orientée dans la direction longitudinale qui déborde axialement dans la direction longitudinale de 3 à 20 mm sur les deux côtés frontaux (24, 26) du paquet de tôles (6), les extrémités des barres qui débordent des deux côtés entourant ainsi la tête de bobinage (20, 22) sur les côtés frontaux.

2. Induit selon la revendication 1, **caractérisé en ce que** les barres (28) sont plus longues, dans la direction longitudinale, que la dimension axiale du paquet de tôles (6).

3. Induit selon l'une des revendications précédentes, **caractérisé en ce que** l'épaisseur des barres (28) est de 1 à 5 mm.

4. Induit selon l'une des revendications précédentes, **caractérisé en ce que** les barres (28) sont collées dans les rainures longitudinales (8).

5. Induit selon l'une des revendications précédentes, **caractérisé en ce que** les barres (28) sont réalisées en bois, en métal, en une matière plastique dure ou en céramique.

6. Moteur électrique comportant un induit (2) selon l'une ou plusieurs des revendications précédentes.

7. Outil électrique équipé d'un moteur électrique selon la revendication 6.
